# EUROPÄISCHE PATENTSCHRIFT

(11) **EP 3 290 758 B1**
(45) Veröffentlichungstag und Bekanntmachung des Hinweises auf die Patenterteilung: **15.05.2019**
(21) Anmeldenummer: 17188471.1
(22) Anmeldetag: 30.08.2017
(51) Int. Cl.: F16J 15/06, F01P 7/14, F16K 5/18, F16K 5/04

(54) **DREHSCHIEBER MIT KOMPAKTEM DICHTELEMENT**
ROTARY VALVE WITH COMPACT SEALING UNIT
SOUPAPE À BOISSEAU AYANT UNÉLÉMENT D'ÉTANCHÉITÉ COMPACT

(30) Priorität: 05.09.2016 DE 102016116550
(43) Veröffentlichungstag der Anmeldung: 07.03.2018
(73) Patentinhaber: Pierburg GmbH, 41460 Neuss (DE)
(72) Erfinder: BADEN, Matthias, 40237 Düsseldorf (DE); KREBBER-HORTMANN, Karl, 40221 Düsseldorf (DE); BRUNETTI, Costantino, 58730 Fröndenberg (DE)
(74) Vertreter: Patentanwälte ter Smitten Eberlein-Van Hoof Rütten Partnerschaftsgesellschaft mbB

(56) Entgegenhaltungen:
- EP-A1- 2 092 970
- DE-A1- 10 219 577
- DE-A1- 10 329 024
- DE-A1-102007 008 553
- DE-A1-102009 025 351
- DE-A1-102014 219 460
- US-A- 2 997 057

## Beschreibung

Die Erfindung betrifft ein Drehschieberventil eines Kraftfahrzeug-Kühlkreislaufs, mit einem eine zylindrische Außenkontur aufweisenden Regelkörper zur Regelung eines Durchströmungsquerschnitts zwischen einem ersten Ventilanschluss und einem senkrecht zu einer Längsachse des Regelkörpers angeordneten zweiten Ventilanschluss, und einem an dem zweiten Ventilanschluss zwischen dem Regelkörper und einem Anschlussstutzen angeordneten Dichtelement.

Derartige zylindrische Drehschieber dienen zur stufenlosen Regelung eines strömenden Mediums, insbesondere eines Kühlmittelstroms in einem Kraftfahrzeug, beispielsweise zur Klimatisierung eines Fahrzeuginnenraums, zur Kühlung eines Motors, einer Batterie oder anderer Aggregate. Solche Drehschieber weisen zumeist eine axiale Ventil-Längsachse auf, um die und/oder entlang derer der zylindrische Regelkörper innerhalb eines Ventilgehäuses bewegbar gelagert ist. Das Drehschieberventil weist in der Regel zwei Ventilanschlüsse auf, es kann aber auch mehr als zwei Ventilanschlüsse aufweisen. Zur Vermeidung einer Leckageströmung zwischen einem ersten Ventilanschluss, insbesondere einem Ventileinlass, und einem zweiten Ventilanschluss, insbesondere einem Ventilauslass, im geschlossenen Zustand des Drehschiebers ist in der Regel zumindest ein Dichtelement vorgesehen. Das Dichtelement ist zumeist koaxial zu dem Anschlussstutzen angeordnet und weist eine zur Ventil-Längsachse senkrecht angeordnete Dichtelement-Längsachse auf. Zur gleitbeweglichen Abdichtung liegt das Dichtelement zumeist mit einem axial wirkenden Dichtbereich an der Außenkontur des Regelkörpers auf. Für eine am Umfang des Dichtelements zusätzlich wirkende Abdichtung ist üblicherweise ein separater Dichtungsring vorgesehen, der das Dichtelement radial umgibt. Dadurch kann - zur Vermeidung einer Überströmung an der Außenkontur des Regelkörpers - ein mit dem ersten Ventilanschluss verbundener, zwischen dem Ventilgehäuse und dem Regelkörper ausgebildeter Zwischenraum gegenüber dem zweiten Ventilanschluss effektiv abgedichtet werden. Es sollte deutlich sein, dass der am Regelkörper radial angeordnete zweite Ventilanschluss als ein Ventileinlass oder Ventilauslass dienen kann. Gleiches gilt auch für den ersten Ventilanschluss, der zudem axial oder radial an dem Ventilgehäuse angeordnet sein kann.

Das Dichtelement ist in der Regel in Form einer Hülse aufgebaut, koaxial zu dem Anschlussstutzen zwischen Anschlussstutzen und Regelkörper angeordnet, begrenzt axial bewegbar und gegen den Regelkörper vorgespannt. Dadurch kann bei einem Öffnen und Schließen des Ventils, das heißt bei einem Drehen des Regelkörpers, der Regelkörper mit der Außenkontur an dem Dichtelement entlang gleiten und gleichzeitig abdichten, idealerweise ohne dass ein Abschaben des Dichtelements durch die Reibung bei der Bewegung zu befürchten ist. Zur Verbesserung der Dichtwirkung kann das Dichtelement zumindest im geschlossenen Zustand des Ventils mittels eines elastischen Vorspannenelementes axial in Richtung des Regelkörpers vorgespannt sein, so dass das an dem Regelkörper anliegende Dichtelement eine Leckageströmung zwischen den beiden Ventilanschlüssen blockiert. Bei Vorliegen von mehreren senkrecht zur Längsachse des Regelkörpers angeordneten Ventilanschlüssen kann selbstverständlich an jedem dieser Ventilanschlüsse jeweils ein solches Dichtelement angeordnet sein.

Aus der DE 10 2011 083 803 A1 ist ein Drehschieber mit einem hülsenartigen Dichtelement bekannt, das an einem dem Regelkörper zugewandten axialen Ende eine zu der zylindrischen Außenkontur des Regelkörpers korrespondierend gekrümmte Stirnseite und an dem anderen, dem Regelkörper abgewandten axialen Ende, eine in einer Ebene angeordnete Stirnseite zur Anlage eines Federelements aufweist. Aufgrund der dadurch über den Umfang des Dichtelements in axialer Erstreckungsrichtung des Dichtelements unterschiedlich ausgebildeten axialen Höhen und Winkeln des Dichtelements, ist die Anpresskraft des Dichtelements auf den Regelkörper im Bereich großer axialer Höhen schwächer ausgebildet als in Bereichen kleiner axialer Höhen des Dichtelements, so dass insbesondere in diesen Bereichen ein Abheben des Dichtelements von der Außenkontur des Regelkörpers und somit ein Leckagestrom auftreten kann.

Zusätzlich ist aus der DE 10 2014 219 460 A1 eine Dichtung für ein Drehschieberventil bekannt, die einen Dichtungskörper aufweist, in dem eine äußere Ringnut ausgebildet ist, in der ein Federelement angeordnet ist. Der Dichtungskörper weist eine plane obere Dichtfläche zum Anschlussstutzen auf, zu der das Federelement parallel angeordnet ist, während die zum Regelkörper weisende Dichtfläche komplementär zur Oberfläche des Regelkörpers ausgebildet ist.

Die DE 103 29 024 A1 offenbart ebenfalls eine derartige Dichtung für einen Drehschieber.

Aus der DE 10 2007 008 553 A1 ist ein Drehschieber bekannt, dessen Dichtglied komplementär zum Regelkörper geformt ist und entsprechend auch die zum Regelkörper weisende Dichtfläche des Anschlussstutzens komplementär zum Regelkörper ausgebildet ist. Die beiden Schenkel des Dichtglieds weisen mit ihren Enden zum Regelkörper, wobei zwischen den Schenkeln eine weiche Dichtlippe angeordnet ist.

Der Erfindung liegt daher die Aufgabe zugrunde, einen Drehschieber bereitzustellen, der eine zuverlässige, dauerhafte und verschleißarme, sowohl axiale als auch radiale Abdichtung ermöglicht. Zudem sollte der Drehschieber relativ kompakt und platzsparend aufgebaut und in der Herstellung und Montage kostengünstig sein.

Die Lösung der Aufgabe erfolgt erfindungsgemäß durch einen Drehschieber mit den Merkmalen des Anspruchs 1.

Erfindungsgemäß ist das Dichtelement auch im unverbauten Zustand als ein zu der zylindrischen Außenkontur des Regelkörpers komplementär gekrümmter Dichtring ausgebildet ist, der einen ersten Dichtungsschenkel und einen zweiten Dichtungsschenkel aufweist, die an einer Schenkelbasis einstückig miteinander verbunden sind, wobei im verbauten Zustand des Dichtelements der erste Dichtungsschenkel mit einer dem Regelkörper zugewandten Schenkelseitenfläche an der Außenkontur des Regelkörpers anliegt, und der zweite Dichtungsschenkel mit einer dem Regelkörper abgewandten Schenkelseitenfläche an dem Anschlussstutzen anliegt. Durch die Ausgestaltung des Dichtelements als ein gekrümmter Dichtring ist ein besonders kompaktes Dichtelement bereitgestellt, das nur einen relativ geringen Platzbedarf zwischen Regelkörper und Anschlussstutzen erfordert, so dass der Drehschieber insgesamt relativ kompakt und platzsparend aufgebaut sein kann. Ferner kann ein an den dichtenden Anlageflächen ausgebildeter Winkel zwischen dem Dichtelement und einer Gegenanlagefläche über den gesamten Umfang des Dichtrings konstant ausgebildet sein, so dass die auf die Dichtfläche wirkende Anpresskraft über dessen gesamten Umfang besonders homogen ausgebildet sind und dadurch eine besonders effektive Abdichtung ermöglicht ist. Darüber hinaus ist durch ein solches Dichtelement eine relativ kostengünstige Herstellung sowie eine aufgrund der Verdrehbarkeit des Rings relativ schnelle Montage ermöglicht. Des Weiteren ist axial zwischen dem ersten Dichtungsschenkel und dem zweiten Dichtungsschenkel ein Federelement zur axialen Vorspannung des Dichtelements angeordnet. Das Federelement kann separat ausgebildet sein und beispielsweise mehrere einzelne, auf einer Innenseite des U-förmigen Dichtelements angeordnete und die Dichtungsschenkel auseinander spannende Federsegmente, wie Spreizbügel, umfassen. Dadurch können die Dichtungsschenkel in axialer Richtung des Dichtelements gegeneinander vorgespannt sein, so dass eine besonders effektive Abdichtung in axialer Richtung sowohl gegenüber dem Anschlussstutzen als auch gegenüber dem Regelkörper erreicht werden kann. Dadurch kann das Dichtelement mit dem Federelement besonders kompakt aufgebaut sein, insbesondere kompakt in axialer Erstreckung des Dichtelements. Ferner ist durch die individuelle Ausgestaltung der einzelnen Federsegmente über den Umfang des Dichtelements eine gleichmäßige oder auch gewünscht ungleichmäßig verteilte axiale Vorspannkraft erreichbar. Zudem kann die Vorspannkraft insbesondere an dem zum Regelkörper zugewandten Dichtungsschenkel über den gesamten Umfang senkrecht zu der Drehschieber-Längsachse wirken, so dass eine besonders effektive Abdichtung ermöglicht ist. Die Dichtungsschenkel können somit nicht nur fluiddruckunterstützt sondern auch federunterstützt axial vorgespannt sein. Das Federelement kann beispielsweise aus Metall oder Kunststoff hergestellt sein und auch als Träger der beiden Dichtungsschenkel dienen. Zusätzlich ist das Federelement als ein zu der zylindrischen Außenkontur des Regelkörpers komplementär gekrümmter Federring ausgebildet. Dadurch kann das Federelement in relativ einfacher Weise auf einer Innenseite des U-förmigen Dichtelements angeordnet bzw. eingespannt sein. Alternativ kann das Federelement vollständig von dem Dichtelement umgeben sein und somit in das Dichtelement integriert sein.

Das Dichtelement weist einen zur Umfangsrichtung U-, V- bzw. C-förmigen Querschnitt auf, wobei die Schenkelbasis in axialer Erstreckungsrichtung des Dichtelements bevorzugt axial zwischen den beiden Dichtungsschenkeln angeordnet ist. Der erste Dichtungsschenkel ist auf einer dem Regelkörper zugewandten axialen Seite des Dichtelements angeordnet, der zweite Dichtungsschenkel auf einer dem Regelköper abgewandten axialen Seite. Die Dichtungsschenkel erstrecken sich von der Schenkelbasis aus im Wesentlichen in eine Richtung, die bezüglich einer Dichtelement-Längsachse einen radialen und einen axialen Anteil aufweist, insbesondere in einem Winkel zur Dichtelement-Längsachse zwischen 40 Grad und 90 Grad. Dabei kann die Ausrichtung der Dichtungsschenkel von der Schenkelbasis über den Umfang des Dichtrings variieren oder konstant bleiben. Dadurch können die Dichtungsschenkel über den gesamten Umfang, das heißt in jedem Umfangsabschnitt, des Dichtelements jeweils besonders exakt an eine entsprechende Dichtfläche angepasst sein, so dass eine effektive Abdichtung ermöglicht ist. Das Dichtelement kann aus Kunststoff hergestellt und relativ stabil und formsteif ausgebildet sein. Die Dichtungsschenkel sind bevorzugt fluiddruckunterstützt ausgebildet, so dass die Dichtungsschenkel mittels eines anliegenden Fluiddrucks vorteilhafterweise auseinander gedrückt und gegen eine Dichtfläche gepresst werden können. Dadurch kann eine besonders effektive Abdichtung erreicht werden.

Beide Dichtungsschenkel weisen jeweils eine dem Regelköper zugewandte Schenkelseitenfläche und eine dem Regelköper abgewandte Schenkelseitenfläche auf. Es sollte deutlich sein, dass unter der Schenkelseitenfläche die umlaufende großflächige Seitenwandfläche des Schenkels zu verstehen ist. Durch die Anlage der Schenkelseitenfläche kann eine relativ breit ausgestaltete Dichtfläche erzeugt sein, die beispielsweise bei einem Entlang-Gleiten der Regelkörper-Außenkontur an dem Dichtring eine sichere und verschleißarme Abdichtung ermöglicht. Ferner kann durch eine im Wesentlichen parallele Anordnung der Schenkelseitenwand zu der zylindrischen Außenkontur eine flächennormale Anpresskraft des Dichtungsschenkels an dem Regelkörper erreicht werden. Zur Verbesserung der Dichtqualität kann an der Schenkelseitenfläche optional zumindest eine hervorstehende umlaufende Dichtlippe ausgebildet sein.

Vorzugsweise ist das Dichtelement derart ausgebildet, dass ein zwischen der dem Regelkörper zugewandten Schenkelseitenfläche des ersten Dichtungsschenkels und der Außenkontur des Regelkörpers ausgebildeter Winkel in jedem Umfangsabschnitt des Dichtelements einem zwischen der dem Regelkörper abgewandten Schenkelseitenfläche des zweiten Dichtungsschenkels und einer dem Regelkörper zugewandten Stirnseitenfläche des Anschlussstutzens ausgebildeten Winkel entspricht. Dieser Winkel kann insbesondere bei einer U-förmigen Ausbildung des Dichtelements auch einen Wert von null Grad aufweisen, beispielsweise bei einer flächigen Anlage der Schenkelseitenflächen an der jeweiligen Gegen-Anlagefläche, die Flächen sind in diesem Fall also parallel zueinander angeordnet. Bei V-förmiger Ausbildung des Dichtelements beträgt der Winkel vorteilhafterweise etwa 30Grad. Durch die über den Umfang gleichbleibenden Winkel der oben genannten Bereiche kann das Dichtelement über den Umfang besonders gleichmäßig axial vorgespannt werden, so dass an der umlaufenden Dichtfläche eine besonders homogene Anpresskraft und somit homogene Dichtwirkung erreicht wird.

Vorzugsweise weist das Dichtelement einen Innendurchmesser und einen Außendurchmesser auf, wobei der Innendurchmesser des Dichtelements im Wesentlichen einem Innendurchmesser des Anschlussstutzens und der Außendurchmesser des Dichtelements im Wesentlichen einem Außendurchmesser des Anschlussstutzens entspricht. Das Dichtelement weist insbesondere eine radiale Materialstärke bzw. Breite auf, die im Wesentlichen der Materialstärke des Anschlussstutzens entspricht. Dadurch steht das Dichtelement von dem Anschlussstutzen radial nicht hervor, so dass das Dichtelement weder eine radiale Außenbegrenzung, beispielsweise durch das Ventilgehäuse, noch einen in dem Strömungskanal des Anschlussstutzens ausgebildeten Fluidstrom beeinflusst. Insbesondere stellt das Dichtelement in dem Strömungskanal keinen Strömungswiderstand dar. Ferner kann die von dem Anschlussstutzen auf das Dichtelement in axialer Richtung wirkende Vorspannkraft über die gesamte Materialstärke bzw. Breite des Dichtrings gleichmäßig verteilt an dem Dichtelement anliegen, so dass das Dichtelement über die gesamte Breite des Dichtrings relativ homogen auf die Außenkontur des Regelkörpers vorgespannt ist und somit ein bereichsweises Abheben des Dichtelements von dem Regelkörper vermieden werden kann.

Vorzugsweise weist das Dichtelement einen zur Umfangsrichtung U-förmigen Querschnitt auf, wobei eine zwischen den freien Enden der Dichtungsschenkel in axialer Erstreckungsrichtung des Dichtelements ausgebildete axiale Aufbauhöhe bzw. Axial-Höhe über den gesamten Umfang des Dichtelements konstant ausgebildet ist. Die Axial-Höhe ist stets in Richtung der Dichtelement-Längsachse ausgerichtet. Die Aufbauhöhe kann bei entsprechender Anordnung dem axialen Abstand zwischen dem freien Ende des ersten Dichtungsschenkels und dem freien Ende des zweiten Dichtungsschenkels entsprechen. Dadurch kann das Dichtelement über dessen gesamten Umfang besonders gleichmäßig an der Außenkontur des Regelkörpers vorgespannt und ein bereichsweises Abheben des Dichtelements von dem Regelkörper vermieden werden, so dass eine dauerhaft zuverlässige Abdichtung erreicht werden kann. Besonders bevorzugt weist das Dichtelement über dessen gesamte Breite, nämlich in jedem zwischen der Schenkelbasis und einem freien Ende des Dichtungsschenkels ausgebildeten Abschnitt des Dichtungsschenkels, eine konstante Axial-Höhe auf. Dadurch kann das Dichtelement auch über dessen gesamte Breite besonders homogen auf die Außenkontur des Regelkörpers vorgespannt sein, so dass die Dichtwirkung noch weiter verbessert ist.

In einer anderen Ausgestaltung der Erfindung weist das Dichtelement einen zur Umfangsrichtung V-förmigen Querschnitt auf, wobei eine zwischen den Dichtungsschenkeln in Richtung einer Schenkelflächen-Normalen angeordnete Normalen-Höhe über den gesamten Umfang des Dichtelements konstant ausgebildet ist. Die Schenkelseitenflächen-Normale entspricht einer senkrecht zu einer der abdichtenden Schenkelseitenfläche angeordneten Geraden. Aufgrund der Krümmung des Dichtrings sowie der über den Umfang variierenden Neigung der Dichtflächen, entspricht die Normalen-Höhe einer Ringhöhe, die der Krümmung des Dichtrings folgt und der tatsächlichen Materialhöhe des Dichtrings an einem Umfangsabschnitt entsprechen kann. Die oben beschriebene Axial-Höhe des Dichtelements kann hierbei über den Umfang des Dichtelements variieren. Durch diese Ausgestaltung kann das Dichtelement über dessen gesamten Umfang besonders gleichmäßig an der Außenkontur des Regelkörpers vorgespannt sein und kann ein bereichsweises Abheben des Dichtelements von dem Regelkörper vermieden werden, so dass eine dauerhaft zuverlässige Abdichtung erreicht werden kann. Besonders bevorzugt weist das Dichtelement über dessen gesamte Breite, nämlich in jedem zwischen der Schenkelbasis und einem freien Ende des Dichtungsschenkels ausgebildeten Abschnitt des Dichtungsschenkels, jeweils eine über den Umfang des Dichtelements konstante Normalen-Höhe auf. Dadurch kann das Dichtelement auch über dessen gesamte Breite besonders homogen auf die Außenkontur des Regelkörpers vorgespannt sein, so dass die Dichtwirkung noch weiter verbessert ist.

In einer Ausgestaltung der Erfindung weist das Dichtelement einen in Richtung des Anschlussstutzens axial hervorstehenden umlaufenden Zentrierabschnitt auf, der in eine an dem Anschlussstutzen ausgebildete Aufnahmeeinrichtung axial ragt. Der Zentrierabschnitt dient einer Zentrierung des Dichtelements gegenüber dem Anschlussstutzen, so dass das Dichtelement in relativ einfacher Weise und dadurch relativ kostengünstig montiert werden kann. Die Aufnahmeeinrichtung ist vorteilhafterweise an einem dem Regelkörper zugewandten axialen Ende des Anschlussstutzens angeordnet und als ein axialer Abschnitt ausgebildet, der zu dem Zentrierabschnitt korrespondierend ausgebildet ist. Die Aufnahmeeinrichtung umfasst beispielsweise eine axiale Ausnehmung, die radial innen, radial außen oder als ein umlaufender Stirnseitenkanal am Anschlussstutzen ausgebildet ist. Dadurch kann der Zentrierabschnitt insbesondere radial an dem Anschlussstutzen anliegen. Eine axiale Anlage des freien Endes des Zentrierabschnitts an dem Anschlussstutzen ist dagegen nicht vorgesehen.

Der Zentrierabschnitt steht bevorzugt von der Schenkelbasis des Dichtelements axial hervor. Dadurch ist der Zentrierabschnitt insbesondere radial außen oder radial innen am Dichtelement angeordnet und kann bei einer Montage in relativ einfacher Weise axial auf den Anschlussstutzen aufgesetzt werden.

Vorzugsweise weisen der erste Dichtungsschenkel und der zweite Dichtungsschenkel in jedem Erstreckungsabschnitt zwischen der Schenkelbasis und einem freien Ende des Dichtungsschenkels jeweils über den gesamten Umfang des Dichtelements einen gleichbleibenden Abstand zueinander auf. Ferner kann die Erstreckungsrichtung der Dichtungsschenkel von der Schenkelbasis in jedem Umfangsabschnitt des Dichtelements gleich sein. Insbesondere können die Dichtungsschenkel in jedem Umfangsabschnitt jeweils spiegelsymmetrisch zueinander ausgebildet sein. Dadurch kann das Dichtelement über dessen gesamten Umfang besonders gleichmäßig vorgespannt sein, wodurch die Abdichtung dadurch besonders effektiv sein kann.

Vorzugsweise liegen der erste Dichtungsschenkel mit der dem Regelkörper zugewandten Schenkelseitenfläche ganzflächig an der Außenkontur des Regelkörpers und/oder der zweite Dichtungsschenkel mit einer dem Regelkörper abgewandten Schenkelseitenfläche ganzflächig an dem Anschlussstutzen an. Durch die ganzflächige Anlage der relativ großen Schenkelseitenfläche kann eine besonders breit ausgestaltete Dichtfläche erzeugt sein, die beispielsweise bei einem Entlang-Gleiten der Regelkörper-Außenkontur an dem Dichtring eine sichere und verschleißarme Abdichtung ermöglicht. Ferner kann durch eine im Wesentlichen parallele Anordnung der Schenkelseitenwand zu der zylindrischen Außenkontur eine besonders homogene Anpresskraft des Dichtungsschenkels an dem Regelkörper erreicht werden.

Das Federelement kann einen ersten Federschenkel und einen zweiten Federschenkel aufweisen, die an einer Federschenkelbasis einstückig miteinander verbunden sind, wobei der erste Federschenkel an dem ersten Dichtungsschenkel und der zweite Federschenkel an dem zweiten Dichtungsschenkel anliegt. Das Federelement ist bevorzugt koaxial zu dem Dichtelement angeordnet und kann einen zur Umfangsrichtung U-, V-bzw. C-förmigen Querschnitt aufweisen, wobei die Federschenkelbasis in axialer Erstreckungsrichtung des Federelements bevorzugt axial zwischen den beiden Federschenkeln angeordnet ist. Dadurch kann das Federelement in relativ einfacher Weise auf einer Innenseite des U-förmigen Dichtelements angeordnet bzw. eingespannt sein. Der erste Federschenkel ist auf einer dem Regelkörper zugewandten axialen Seite des Federelements angeordnet und liegt an einer dem Regelkörper abgewandten Schenkelseitenfläche des ersten Dichtungsschenkels an. Der zweite Federschenkel ist auf einer dem Regelköper abgewandten axialen Seite angeordnet und liegt an einer dem Regelkörper zugewandten Schenkelseitenfläche des zweiten Dichtungsschenkels an. Die Federschenkel liegen jeweils insbesondere flächig an der Schenkelseitenfläche an, so dass eine über die Längserstreckung des Schenkels sowie den Umfang des Dichtelements besonders homogene Übertragung der Vorspannkraft auf das Dichtelement erfolgt.

Vorzugsweise weist der Anschlussstutzen an einem dem Regelkörper zugewandten axialen Ende eine zu der Außenkontur des Regelkörpers komplementär gekrümmte erste Stirnseitenfläche auf, die an dem Dichtelement flächig anliegt. Dadurch kann der Anschlussstutzen mit der dem Regelkörper zugewandten Seite über den gesamten Umfang an dem Dichtring anliegen und somit eine homogene Anpresskraft des Dichtelements auf den Regelkörper bewirken, so dass eine besonders gute Abdichtung ermöglicht ist.

In einer Ausgestaltung der Erfindung ist vorgesehen, dass der zweite Ventilanschluss einen Ventilauslass bildet und die offene Seite des Dichtungselements nach radial außen zeigt. Das Dichtelement liegt dadurch derart zwischen dem als Auslassstutzen ausgebildeten Anschlussstutzen und dem Regelkörper an, dass das Dichtelement fluiddruckunterstützt sein kann. Insbesondere kann ein auf der offenen Seite des Dichtungselements anliegender einlassseitiger Fluiddruck die Dichtschenkel axial auseinander und damit gegen die jeweilige Dichtfläche pressen, so dass die Abdichtung besondere effektiv ist.

In einer anderen Ausgestaltung der Erfindung ist vorgesehen, dass der zweite Ventilanschluss einen Ventileinlass bildet und die offene Seite des Dichtungselements nach radial innen zeigt. Das Dichtelement liegt dadurch derart zwischen dem als Einlassstutzen ausgebildeten Anschlussstutzen und dem Regelkörper an, dass das Dichtelement fluiddruckunterstützt sein kann. Insbesondere kann ein auf der offenen Seite des Dichtungselements anliegender einlassseitiger Fluiddruck die Dichtschenkel axial auseinander und damit gegen die jeweilige Dichtfläche pressen, so dass die Abdichtung besondere effektiv ist.

In der zuvor genannten Ausgestaltung kann zudem die Schenkelbasis an dem Ventilgehäuse anliegen, beispielsweise in einem umlaufenden dritten Anlagebereich. Dadurch kann eine integrierte zusätzliche Abdichtung an dem Ventilgehäuse erfolgen, so dass vorzugsweise radial außen an dem Dichtelement ein axialer Leckagestrom vermieden werden kann.

Nachfolgend wird die Erfindung anhand bevorzugter Ausführungsformen unter Bezugnahme auf die anliegenden Zeichnungen näher erläutert.
Figur 1 zeigt schematisch einen Ausschnitt einer Seitenansicht eines erfindungsgemäßen Drehschieberventils mit einem Dichtelement in geschnittener Darstellung,
Figur 2 zeigt schematisch das Dichtelement,
Figuren 3a und 3b zeigen schematisch eine Detailansicht des in Figur 1 gezeigten Drehschieberventils, wobei die Ansichten um 90° zueinander gedreht sind,
Figur 4 zeigt schematisch eine Detailansicht einer zweiten Ausgestaltung des Dichtelements, und
Figur 5 zeigt schematisch eine Detailansicht einer dritten Ausgestaltung des Dichtelements.

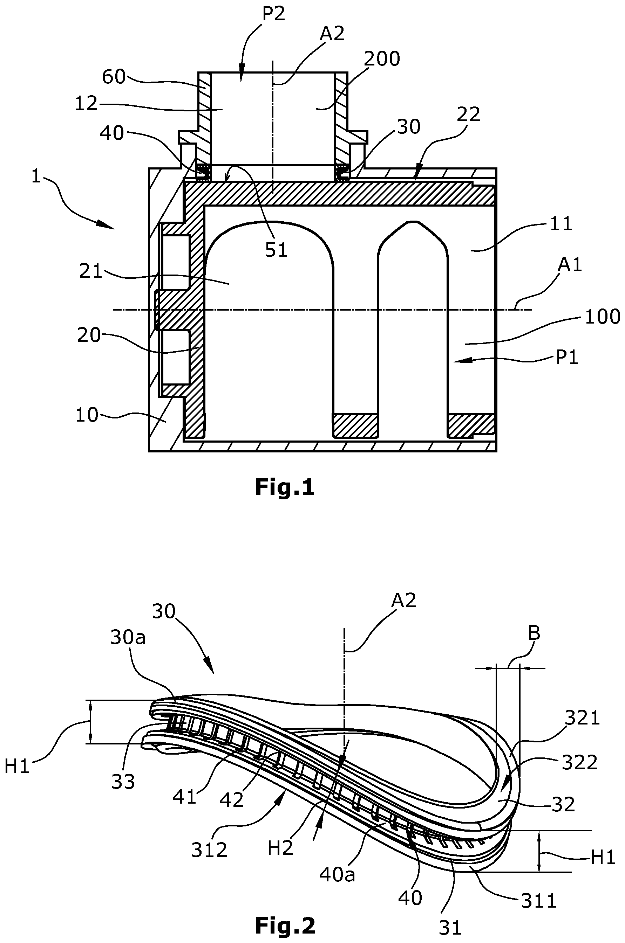

In der Figur 1 ist ein erfindungsgemäßes Drehschieberventil 1 eines nicht dargestellten Kraftfahrzeug-Kühlkreislaufs gezeigt. Das Drehschieberventil 1 umfasst ein Ventilgehäuse 10 mit einem ersten Ventilanschluss 11 und einem zweiten Ventilanschluss 12. Der erste Ventilanschluss 11 ist in den Figuren 1 bis 4 einem Ventileinlass 100 zugeordnet und durch einen axialen Ventil-Einlasskanal gebildet, der koaxial zu einer Ventil-Längsachse A1 angeordnet ist. An dem ersten Ventilanschluss 11 liegt ein einlassseitiger Druck P1 an. Der zweite Ventilanschluss 12 ist in den Figuren 1 bis 4 einem Ventilauslass 200 zugeordnet und ist durch einen radialen Ventil-Auslasskanal gebildet, der koaxial zu einer senkrecht zu der Ventil-Längsachse A1 ausgerichteten Dichtelement-Längsachse A2 angeordnet ist. An dem zweiten Ventilanschluss 12 liegt ein auslassseitiger Druck P2 an, der üblicherweise geringer als der einlassseitige Druck P1 ist. Innerhalb des Ventilgehäuses 10 zwischen dem ersten Ventilanschluss 11 und dem zweiten Ventilanschluss 12 ist ein um die Ventil-Längsachse A1 drehbar und/oder entlang der Ventil-Längsachse A1 verschiebbar gelagerter Regelkörper 20 zur stufenlosen Regelung eines Durchgangskanals 21 angeordnet.

Der Regelkörper 20 ist als ein zylindrischer Drehschieber ausgebildet und weist einen von einem Medium durchströmbaren Durchgangskanal 21 auf. Beispielsweise durch Drehen des Regelkörpers 20 um die Ventil-Längsachse A1 wird der Durchgangskanal 21 zwischen dem ersten Ventilanschluss 11 und dem zweiten Ventilanschluss 12 freigegeben oder verschlossen. In der Figur 1 befindet sich der Regelkörper 20 in einem den Durchgangskanal 21 verschließenden Zustand. Um ein Drehen des Regelkörpers 20 zu ermöglichen, ist der Regelkörper 20 spielbehaftet gelagert, wodurch auch an der zylindrischen Außenkontur 22 des Regelkörpers 20 der dem ersten Ventilanschluss 11 zugeordnete einlassseitige Druck P1 anliegt.

Zur Vermeidung eines Leckagestroms zwischen dem ersten Ventilanschluss 11 und dem zweiten Ventilanschluss 12, insbesondere an der zylindrischen Außenkontur 22 des Regelkörpers 20, ist an dem zweiten Ventilanschluss 12 eine Einrichtung zur Abdichtung vorgesehen. Dazu ist an dem zweiten Ventilanschluss 12 zwischen dem Regelkörper 20 und einem Anschlussstutzen 60 ein Dichtelement 30 angeordnet, das zur gleitbeweglichen Abdichtung an der Außenkontur 22 des Regelkörpers 20 anliegt. Das Dichtelement 30 kann bei der Montage des Drehschiebers 1 auslassseitig in den Auslasskanal des Ventilgehäuses 10 eingeschoben und durch Aufsetzen des Anschlussstutzens 60 verspannt werden.

Wie in der Figur 2 gezeigt, ist das Dichtelement 30 als ein zu der zylindrischen Außenkontur 22 des Regelkörpers 20 komplementär gekrümmter Dichtring 30a ausgebildet. Die Krümmung des Dichtrings 30a ist in Umfangsrichtung korrespondierend zu der Außenkontur 22 unterschiedlich stark konkav ausgebildet, so dass der Dichtring 30a mit einem dem Regelkörper 20 zugewandten axialen Ende außen an der zylindrischen Außenkontur 22 umlaufend anliegen kann. An diesem dem Regelkörper 20 zugewandten axialen Ende weist das Dichtelement 30 zudem eine an die zylindrische Außenkontur 22 des Regelkörpers 20 schräge bzw. konische Stirnseitenflächen 312 auf, so dass das Dichtelement 30 mit der dem Regelkörper 20 zugewandten Stirnseitenfläche 312 flächig an der zylindrischen Außenkontur 22 anliegen kann. Insbesondere ist die Stirnseitenfläche 312 in Richtung weg von einer von der Ventil-Längsachse A1 und der Dichtelement-Längsachse A2 aufgespannten Ebene zunehmend schräg ausgebildet. Durch diese Ausgestaltung des Dichtelements als ein gekrümmter Dichtring ist ein besonders kompaktes Dichtelement bereitgestellt, das nur einen relativ geringen Platzbedarf zwischen Regelkörper und Anschlussstutzen erfordert, so dass der Drehschieber insgesamt relativ kompakt und platzsparend aufgebaut sein kann. Ferner kann die auf die Dichtfläche wirkende Anpresskraft über den gesamten Umfang des Dichtelements besonders homogen ausgebildet sein, so dass eine besonders effektive Abdichtung ermöglicht ist.

Der Dichtring weist einen zur Umfangsrichtung U-förmigen Querschnitt auf, wobei die offene Seite des Querschnitts nach radial außen zeigt. Das Dichtelement 30 weist folglich zwei Dichtungsschenkel 31, 32 auf, die über eine Schenkelbasis 33 einstückig miteinander verbunden sind. Das Dichtelement 30 weist zwischen den freien Enden 311, 321 der Dichtungsschenkel 31, 32 eine in axialer Erstreckungsrichtung des Dichtelements 30 ausgebildete Axial-Höhe H1 auf, die über den gesamten Umfang des Dichtelements 30 konstant ausgebildet ist. Das in Figur 2 gezeigte Dichtelement 30 weist im Wesentlichen parallel zueinander angeordnete Dichtungsschenkel 31, 32 auf, die somit zudem über die gesamte Breite B des Dichtelements 30 eine konstante Axial-Höhe H1 aufweisen, wobei die Breite B des Dichtelements 30 gebildet ist durch den Abstand bzw. die Länge des Dichtungsschenkels 31, 32 zwischen der Schenkelbasis 33 und einem freien Ende 311, 321 des Dichtungsschenkels 31, 32.

Zwischen dem ersten und zweiten Dichtungsschenkel 31, 32 ist ein Federelement 40 angeordnet, das einen zu der zylindrischen Außenkontur 22 des Regelkörpers 20 komplementär gekrümmten Federring 40a mit mehreren daran angeordneten Spreizrippen 44 aufweist. Das Federelement 40 weist einen zur Umfangsrichtung ebenfalls U-förmigen Querschnitt mit einem dem Regelkörper 20 zugewandten ersten Federschenkel 41, einem dem Regelkörper 20 abgewandten zweiten Federschenkel 42 und einer Federschenkelbasis 43 auf, über die die beiden Federschenkel 41, 42 einstückig miteinander verbunden sind. Das Federelement 40 liegt mit dem ersten Federschenkel 41 an dem ersten Dichtungsschenkel 31 und mit dem zweiten Federschenkel 42 an dem zweiten Dichtungsschenkel 32 umlaufend an. Dadurch kann das Federelement 40 bei der Montage des Drehschiebers 1 in besonders einfacher Weise von radial außen in das U-förmige Dichtelement 30 eingesetzt werden.

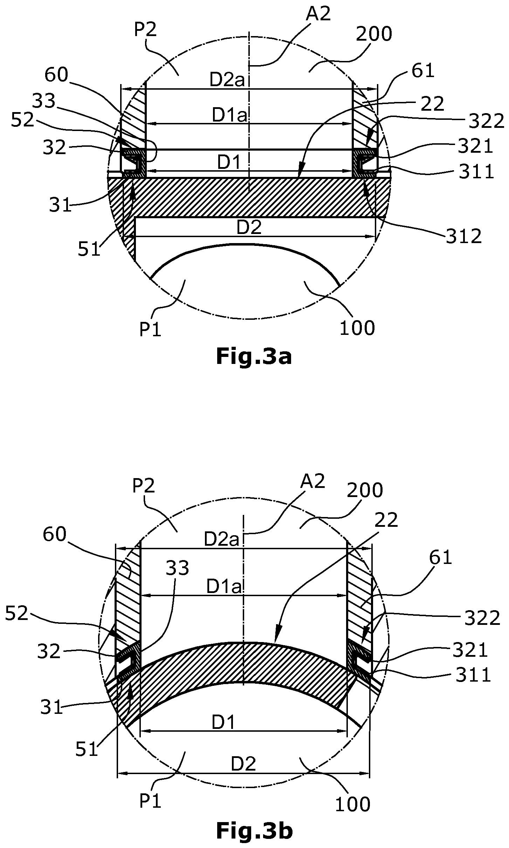

Wie insbesondere in den Figuren 3a und 3b erkennbar, weist das Dichtelement 30 einen Innendurchmesser D1 und einen Außendurchmesser D2 auf, die jeweils im Wesentlichen einem Innendurchmesser D1a und einem Außendurchmesser D2a des Anschlussstutzens 60 entsprechen, so dass die Breite B des Dichtelements 30 im Wesentlichen der radialen Materialstärke des Anschlussstutzens 60 entspricht. Das Dichtelement 30 stellt dadurch in dem Strömungskanal keinen unerwünschten Strömungswiderstand dar.

Der erste Dichtungsschenkel 31 ist auf der dem Regelkörper 20 zugewandten axialen Seite des Dichtelements 30 angeordnet und weist die zuvor bereits angesprochene, dem Regelkörper 20 zugewandte Schenkelseitenfläche 312 auf, mit der das Dichtelement 30 in einem umlaufenden ersten Anlagebereich 51 an der Außenkontur 22 des Regelkörpers 20 ganzflächig anliegt. Der zweite Dichtungsschenkel 32 ist auf der dem Regelkörper 20 abgewandten axialen Seite des Dichtelements 30 angeordnet und weist eine dem Regelkörper 20 abgewandte Schenkelseitenfläche 322 auf, mit der das Dichtelement 30 in einem umlaufenden zweiten Anlagebereich 52 an dem Anschlussstutzen 60 ganzflächig anliegt. Dadurch kann mittels eines einzigen Dichtelements 30 eine effektive axiale Abdichtung des ersten Ventilanschlusses 11 gegenüber dem zweiten Ventilanschluss 12 erfolgen. Insbesondere können die beiden Dichtungsschenkel 31, 32 mittels des am ersten Ventilanschluss 11 anliegenden Fluiddruck P1 axial auseinander gepresst werden, so dass die axiale Dichtwirkung an dem Regelkörper 20 und Anschlussstutzen 60 fluiddruckunterstützt ist. Zur weiteren Vorspannung der Dichtungsschenkel 31, 32 ist zwischen dem ersten Dichtungsschenkel 31 und dem zweiten Dichtungsschenkel 32 das Federelement 40 angeordnet.

Zur weiteren Optimierung der axialen Abdichtung an dem Anschlussstutzen 60, weist der Anschlussstutzen 60 an einem dem Regelkörper 20 zugewandten axialen Ende 61 eine über den Umfang zu der Außenkontur 22 des Regelkörpers 22 komplementär gekrümmte und geneigte erste Stirnseitenfläche 611 auf. Insbesondere ist die erste Stirnseitenfläche 611 entsprechend der Kontur des zweiten Dichtungsschenkels 32 in Richtung weg von dem Regelkörper 20 teilweise konisch verjüngend ausgebildet.

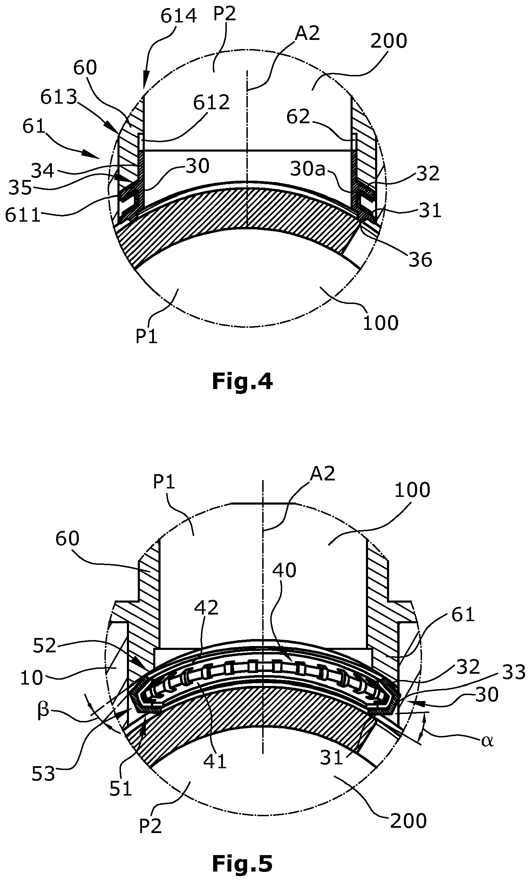

In der Figur 4 ist eine weitere Ausgestaltung des Dichtelements 30 gezeigt, die selbstverständlich auch mit den anderen gezeigten Ausgestaltungen kombinierbar ist. Das Dichtelement 30 weist an einem dem Regelkörper 20 abgewandten axialen Ende 35 einen von der Schenkelbasis 33 in Richtung des Anschlussstutzens 60 axial hervorstehenden und umlaufenden Zentrierabschnitt 34 zur Ausrichtung des Dichtelements 30 gegenüber dem Anschlussstutzen 60 auf. Dazu weist der Anschlussstutzen 60 an dem axialen Ende 61 in einem radial radial inneren Bereich 614 eine Aufnahmeeinrichtung 62 zur Aufnahme des Zentrierabschnittes 34 auf, insbesondere einen axialen Absatz. An diesem Absatz 62 liegt der Zentrierabschnitt 34 ausschließlich radial an. In diesem Bereich entspricht der Innendurchmesser des Anschlussstutzens 60 vorteilhafterweise im Wesentlichen dem Außendurchmesser des Zentrierabschnittes 34. Die erste Stirnseitenfläche 611 zur axialen Anlage an das Dichtelement 30 ist ausschließlich in einem äußeren Bereich 613 des Anschlussstutzens 60 ausgebildet. Zudem weist das Dichtelement 30 an der dem Regelkörper 20 zugewandten Schenkelseitenfläche 312 des ersten Dichtungsschenkels 31 eine in Richtung der Außenkontur 22 des Regelkörpers 20 hervorstehende und hieran anliegende Dichtlippe 36 auf, die eine ringförmige Abdichtung ermöglicht.

In der Figur 5 ist eine alternative Ausgestaltung des Dichtelements 30 gezeigt, bei der insbesondere der Ventilanschluss 12 einem Ventileinlass 100 und der erste Ventilanschluss 11 einem Ventileinlass 100 zugeordnet ist. Entsprechend liegt am zweiten Ventilanschluss 12 ein von außen in das Ventil einströmender einlassseitiger Druck P1 an. Zur Fluiddruckunterstützung ist daher die offene Seite des U-förmigen Dichtelements 30 vorteilhafterweise nach radial innen des Dichtrings 30a ausgerichtet. Dadurch kann der an der offenen Seite des Dichtelements 30 anliegende Druck P1, der höher als der auslassseitige Druck P2 ist, die beiden Dichtungsschenkel 31, 32 axial auseinander und die Schenkelbasis 33 nach radial außen pressen. Dadurch kann die Schenkelbasis 33 in einem umlaufenden dritten Anlagebereich 53 an dem Ventilgehäuse 20 anliegen und eine radiale Abdichtung an dem Ventilgehäuse 10 bewirken. Eine solche Anordnung des Dichtelements 30 ist insbesondere dann vorteilhaft, wenn an dem zweiten Ventilanschluss 12 ein relativ hoher Fluiddruck und an dem ersten Ventilanschluss 11 ein relativ niedriger Fluiddruck anliegt, insbesondere wenn der Anschlussstutzen 60 als Einlassstutzen dient. Neben der fluidruckgesteuerten Vorspannung des Dichtelements ist auch in dieser Ausgestaltung ein radial innen in die Öffnung des U-förmigen Dichtelements 30 eingesetztes Federelement 40 vorgesehen, das als ein Federring 40a ausgebildet ist und die beiden Dichtungsschenkel 31, 32 mittels der beiden Federschenkel 41, 42 axial auseinander spannt.

Durch die in der Figur 5 gezeigten Ausgestaltung des Dichtelements 30 sind der erste Anlagebereich 51 und der zweite Anlagebereich 52 ausschließlich in einem Bereich eines freien Endes 311, 321 des radialen Dichtungsschenkels 31, 32 angeordnet. Dadurch bildet sich zwischen der Außenkontur 22 und der Schenkelseitenfläche 312 ein Winkel α und zwischen der Stirnseitenfläche 611 des Anschlussstutzens 60 und der Schenkelseitenfläche 322 ein Winkel β. Der Winkel α entspricht dabei in jedem Umfangsabschnitt des Dichtelements 30 dem Winkel β. Durch die über den Umfang gleichen Winkel α, β kann das Dichtelement 30 über den Umfang besonders gleichmäßig axial vorgespannt werden, so dass an der umlaufenden Dichtfläche eine besonders homogene Anpresskraft und somit homogene Dichtwirkung erreicht wird.

Hieraus folgt, dass das Drehschieberventil in den beschriebenen Ausführungsformen sowohl eine platzsparende Bauform als auch eine hohe Dichtigkeit eines Einlasses gegenüber einem Auslass aufweist, da das Dichtelement am radialen Anschluss des zylindrischen Regelkörpers durch entsprechende Ausgestaltung eine über den Umfang gleichmäßige Dichtwirkung entfaltet. Dies führt zu einer dauerhaft störungsfreien und zuverlässigen Abdichtung.

Beispielsweise können durch eine technisch sinnvolle Kombination der separat beschriebenen Merkmale weitere nicht dargestellte Ausführungsbeispiele generiert werden, wobei der Schutzbereich alleinig durch die folgenden Ansprüche definiert und begrenzt ist.

### Bezugszeichenliste

- 1: Drehschieberventil
- 10: Ventilgehäuse
- 11: erster Ventilanschluss
- 12: zweiter Ventilanschluss
- 20: Regelkörper
- 21: Strömungskanal
- 22: Außenkontur
- 30: Dichtelement
- 30a: Dichtring
- 31: erster Dichtungsschenkel
- 311: freies Ende
- 312: Schenkelseitenfläche
- 32: zweiter Dichtungsschenkel
- 321: freies Ende
- 322: Schenkelseitenfläche
- 33: Schenkelbasis
- 34: Zentrierabschnitt
- 35: axiales Ende
- 36: Dichtlippe
- 40: Federelement
- 40a: Federring
- 41: erster Federschenkel
- 42: zweiter Federschenkel
- 43: Federschenkelbasis
- 44: Federrippe, Spreizrippe
- 51: erster Anlagebereich
- 52: zweiter Anlagebereich
- 53: dritter Anlagebereich
- 60: Stutzen, Anschlussstutzen
- 61: axiales Ende
- 611: erste Stirnseitenfläche
- 613: radial äußerer Bereich
- 614: radial innerer Bereich
- 62: Aufnahmeeinrichtung, Absatz
- 100: Ventileinlass
- 200: Ventilauslass
- P1: Fluiddruck
- P2: Fluiddruck
- A1: Ventil-Längsachse
- A2: Dichtelement-Längsachse
- H1: Axial-Höhe
- H2: Normalen-Höhe
- B: Breite
- D1: Innendurchmesser Dichtelement
- D2: Außendurchmesser Dichtelement
- D1a: Innendurchmesser Anschlussstutzen
- D2a: Außendurchmesser Anschlussstutzen

## Patentansprüche

1. Drehschieberventil (1) für einen Kraftfahrzeug-Kühlkreislauf, mit
- einem eine zylindrische Außenkontur (22) aufweisenden Regelkörper (20) zur Regelung eines Durchströmungsquerschnitts (21) zwischen einem ersten Ventilanschluss (11) und einem senkrecht zu einer Längsachse (A1) des Regelkörpers (20) angeordneten zweiten Ventilanschluss (12), und
- einem an dem zweiten Ventilanschluss (12) zwischen dem Regelkörper (20) und einem Anschlussstutzen (60) angeordneten Dichtelement (30),
**dadurch gekennzeichnet, dass**
das Dichtelement (30) im unverbauten Zustand als ein zu der Außenkontur (22) des Regelkörpers (20) komplementär gekrümmter Dichtring (30a) ausgebildet ist, der einen ersten Dichtungsschenkel (31) und einen zweiten Dichtungsschenkel (32) aufweist, die an einer Schenkelbasis (33) einstückig miteinander verbunden sind, wobei im verbauten Zustand des Dichtelements (30) der erste Dichtungsschenkel (31) mit einer dem Regelkörper (20) zugewandten Schenkelseitenfläche (312) an der Außenkontur (22) des Regelkörpers (20) anliegt, und der zweite Dichtungsschenkel (32) mit einer dem Regelkörper (20) abgewandten Schenkelseitenfläche (322) an dem Anschlussstutzen (60) anliegt, wobei axial zwischen dem ersten Dichtungsschenkel (31) und dem zweiten Dichtungsschenkel (32) ein Federelement (40) zur axialen Vorspannung des Dichtelements (30) angeordnet ist, welches als ein zu der zylindrischen Außenkontur (22) des Regelkörpers (20) komplementär gekrümmter Federring (40a) ausgebildet ist.

2. Drehschieberventil (1) nach Anspruch 1,
**dadurch gekennzeichnet, dass**
das Dichtelement (30) derart ausgebildet ist, dass ein zwischen der Außenkontur (22) des Regelkörpers (20) und der an der Außenkontur (22) anliegenden Schenkelseitenfläche (312) ausgebildeter Winkel (α) in jedem Umfangsabschnitt des Dichtelements (30) einem zwischen einer dem Regelkörper (20) zugewandten Stirnseitenfläche (611) des Anschlussstutzens (60) und der an dem Anschlussstutzen (60) anliegenden Schenkelseitenfläche (322) ausgebildeten Winkel (β) entspricht.

3. Drehschieberventil (1) nach einem der Ansprüche 1 oder 2,
**dadurch gekennzeichnet, dass**
das Dichtelement (30) einen Innendurchmesser (D1) und einen Außendurchmesser (D2) aufweist, die jeweils im Wesentlichen einem Innendurchmesser (D1a) und einem Außendurchmesser (D2a) des Anschlussstutzens (60) entsprechen.

4. Drehschieberventil (1) nach einem der voranstehenden Ansprüche, **dadurch gekennzeichnet, dass**
das Dichtelement (30) einen zur Umfangsrichtung U-förmigen Querschnitt aufweist, und eine zwischen den freien Enden (311, 321) der Dichtungsschenkeln (31, 32) in axialer Erstreckungsrichtung des Dichtelements (30) ausgebildete Axial-Höhe (H1) über den gesamten Umfang des Dichtelements (30) konstant ausgebildet ist.

5. Drehschieberventil (1) nach einem der Ansprüche 1 bis 3,
**dadurch gekennzeichnet, dass**
das Dichtelement (30) einen zur Umfangsrichtung V-förmigen Querschnitt aufweist, und eine zwischen den Dichtungsschenkeln (31, 32) in Richtung einer Schenkelflächen-Normalen angeordnete Normalen-Höhe (H2) über den gesamten Umfang des Dichtelements (30) konstant ausgebildet ist.

6. Drehschieberventil (1) nach einem der voranstehenden Ansprüche, **dadurch gekennzeichnet, dass**
das Dichtelement (30) einen in Richtung des Anschlussstutzens (60) axial hervorstehenden umlaufenden Zentrierabschnitt (34) aufweist, der in eine an dem Anschlussstutzen (60) ausgebildete Aufnahme (62) axial ragt.

7. Drehschieberventil (1) nach Anspruch 6,
**dadurch gekennzeichnet, dass**
der Zentrierabschnitt (34) von der Schenkelbasis (33) des Dichtelements (30) axial hervorsteht.

8. Drehschieberventil (1) nach einem der voranstehenden Ansprüche, **dadurch gekennzeichnet, dass**
der erste Dichtungsschenkel (31) und der zweite Dichtungsschenkel (32) in jedem Erstreckungsabschnitt zwischen der Schenkelbasis (33) und einem freien Ende (311, 321) des Dichtungsschenkels (31, 32) jeweils über den gesamten Umfang des Dichtelements (30) einen gleichbleibenden Abstand zueinander aufweisen.

9. Drehschieberventil (1) nach einem der voranstehenden Ansprüche, **dadurch gekennzeichnet, dass**
der erste Dichtungsschenkel (31) mit der dem Regelkörper (20) zugewandten Schenkelseitenfläche (312) ganzflächig an der Außenkontur (22) des Regelkörpers (20) anliegt und/oder der zweite Dichtungsschenkel (32) mit einer dem Regelkörper (20) abgewandten Schenkelseitenfläche (322) ganzflächig an dem Anschlussstutzen (60) anliegt.

10. Drehschieberventil (1) nach einem der voranstehenden Ansprüche, **dadurch gekennzeichnet, dass**
das Federelement (40) einen ersten Federschenkel (41) und einen zweiten Federschenkel (42) aufweist, die an einer Federschenkelbasis (43) einstückig miteinander verbunden sind, wobei der erste Federschenkel (41) an dem ersten Dichtungsschenkel (31) und der zweite Federschenkel (42) an dem zweiten Dichtungsschenkel (32) anliegt.

11. Drehschieberventil (1) nach einem der voranstehenden Ansprüche, **dadurch gekennzeichnet, dass**
der Anschlussstutzen (60) an einem dem Regelkörper (20) zugewandten axialen Ende (61) eine zu der Außenkontur (22) des Regelkörpers (20) komplementär gekrümmte erste Stirnseitenfläche (611) aufweist, die an dem Dichtelement (30) flächig anliegt.

12. Drehschieberventil (1) nach einem der voranstehenden Ansprüche, **dadurch gekennzeichnet, dass**
der zweite Ventilanschluss (12) einen Ventilauslass (200) bildet und die offene Seite des Dichtungselements (30) nach radial außen zeigt.

13. Drehschieberventil (1) nach einem der voranstehenden Ansprüche, **dadurch gekennzeichnet, dass**
der zweite Ventilanschluss (12) einen Ventileinlass (100) bildet und die offene Seite des Dichtungselements (30) nach radial innen zeigt.

14. Drehschieberventil (1) nach Anspruch 13,
**dadurch gekennzeichnet, dass**
die Schenkelbasis (33) an dem Ventilgehäuse (20) anliegt.

## Claims

1. Rotary valve (1) for a motor vehicle cooling circuit, comprising
- a control body (20) for controlling a flow cross section (21) between a first valve connection (11) and a second valve connection (12), which is arranged orthogonally to a longitudinal axis (A1) of the control body (20), said control body having a cylindrical outer contour (22), and
- a sealing element (30) arranged at the second valve connection (12) between the control body (20) and a connection branch (60),
**characterized in that**
in a non-assembled state, the sealing element (30) is formed as a sealing ring (30a) curved complementarily to the outer contour (22) of the control body (20), said sealing ring having a first sealing leg (31) and a second sealing leg (32) integrally connected with each other at a leg base (33), wherein, in the assembled state of the sealing element (30), the first sealing leg (31) abuts on the outer contour (22) of the control body (20) by a leg side surface (312) facing the control body (20), and the second sealing leg (32) abuts on the connection branch (60) by a leg side surface (322) averted from the control body (20), wherein a spring element (30) is arranged axially between the first sealing leg (31) and the second sealing leg (32) for the axial biasing of the sealing element (30), said spring element being configured as a spring ring (40a) curved complementarily to the cylindrical outer contour (22) of the control body (20).

2. Rotary valve (1) of claim 1, **characterized in that** the sealing element (30) is configured such that an angle (α) formed between the outer contour (22) of the control body (20) and the leg side surface (312) abutting on the outer contour (22) in each circumferential section of the sealing element (30) corresponds to an angle (β) formed between a front side surface (611) of the connection branch (60) facing the control body (20) and the leg side surface (322) abutting on the connection branch (60).

3. Rotary valve (1) of one of claims 1 or 2, **characterized in that** the sealing element (30) has an inner diameter (D1) and an outer diameter (D2) each substantially corresponding to an inner diameter (D1a) and an outer diameter (D2a) of the connection branch (60).

4. Rotary valve (1) of one of the preceding claims, **characterized in that** the sealing element (30) has a U-shaped cross section with respect to the circumferential direction, and an axial height (H1) is configured to be constant over the entire circumference of the sealing element (30), said height being formed between the free ends (311, 321) of the sealing legs (31, 32) in the axial extension of the sealing element (30).

5. Rotary valve (1) of one of claims 1 t 3, **characterized in that** the sealing element (30) has a V-shaped cross section with respect to the circumferential direction, and a perpendicular height (H2) is configured to be constant over the entire circumference of the sealing element (30), said height being arranged between the sealing legs (31, 32) in the direction of a leg surface perpendicular.

6. Rotary valve (1) of one of the preceding claims, **characterized in that** the sealing element (30) has a circumferential centering section (34) protruding axially towards the connection branch (60), said element protruding axially into a seat (62) formed in the connection branch (60).

7. Rotary valve (1) of claim 6, **characterized in that** the centering section (34) protrudes axially from the leg base (33) of the sealing element (30).

8. Rotary valve (1) of one of the preceding claims, **characterized in that**, in each section of their extension, the first sealing leg (31) and the second sealing leg (32) respectively have a constant mutual distance between the leg base (33) and a free end (311, 312) of the sealing leg (31, 32) over the entire circumference of the sealing element (30).

9. Rotary valve (1) of one of the preceding claims, **characterized in that** the first sealing leg (31) is in full surface contact with the outer contour (22) of the control body (20) by the leg side surface (312) facing the control body (20) and/or the second sealing leg (32) is in full surface contact with the connection branch (60) by a leg side surface (322) averted from the control body (20).

10. Rotary valve (1) of one of the preceding claims, **characterized in that** the spring element (40) has a first spring leg (41) and a second spring leg (42) integrally connected with each other at a spring leg base (43), wherein the first spring leg (41) abuts on the first sealing leg (31) and the second spring leg (42) abuts on the second sealing leg (32).

11. Rotary valve (1) of one of the preceding claims, **characterized in that**, at an axial end (61) facing the control body (20), the connection branch (60) has a first front side surface (611) curved complementarily to the outer contour (22) of the control body (20), said surface being in surface contact with the sealing element (30).

12. Rotary valve (1) of one of the preceding claims, **characterized in that** the second valve connection (12) forms a valve outlet (200) and the open side of the sealing element (30) is directed radially outward.

13. Rotary valve (1) of one of the preceding claims, **characterized in that** the second valve connection (12) forms a valve inlet (100) and the open side of the sealing element (30) is directed radially inward.

14. Rotary valve (1) of one of claim 13, **characterized in that** the leg base (33) abuts on the valve housing (10).

## Revendications

1. Soupape à boisseau (1) pour circuit de refroidissement d'un véhicule motorisé, avec
- un corps de réglage (20) pour le réglage d'une section transversale d'écoulement (21) entre un premier raccord de soupape (11) et un deuxième raccord de soupape (12) disposé de manière orthogonale par rapport à un axe longitudinal (A1) du corps de réglage (20), le corps de réglage (20) ayant un contour extérieur (22) cylindrique, et
- un élément d'étanchéité (30) disposé au deuxième raccord de soupape (12) entre le corps de réglage (20) et un manchon de raccordement (60),
**caractérisée en ce que**
ledit élément d'étanchéité (30), en état non-assemblé, est en forme d'un anneau d'étanchéité (30a) recourbé de manière complémentaire au contour extérieur (22) du corps de réglage (20), ou ledit anneau comprend une première branche d'étanchéité (31) et une deuxième branche d'étanchéité (32) rejointes de manière intégrale à une base des branches (33), ou, dans l'état assemblé dudit élément d'étanchéité (30), ladite première branche d'étanchéité (31) repose sur le contour extérieur (22) du corps de réglage (20) par une surface latérale de branche (312) tournée vers ledit corps de réglage (20), et la deuxième branche d'étanchéité (32) repose sur le manchon de raccordement (60) par une surface latérale de branche (322) détournée dudit corps de réglage (20), ou un élément de ressort (40) pour la précontrainte axiale dudit élément d'étanchéité (30) est disposé axialement entre ladite première branche d'étanchéité (31) et la deuxième branche d'étanchéité (32), ledit élément de ressort est réalisé sous forme d'une rondelle-ressort (40a) recourbée de manière complémentaire au contour extérieur (22) du corps de réglage (20).

2. Soupape à boisseau (1) selon la revendication 1, **caractérisée en ce que** ledit élément d'étanchéité (30) est réalisé d'une telle manière qu'un angle (α) entre le contour extérieur (22) du corps de réglage (20) et la surface latérale de branche (312) reposant sur le contour extérieur (22) correspond dans chaque section circonférentielle dudit élément d'étanchéité (30) à un angle (β) entre une surface de face frontale (611) dudit manchon de raccordement (60), tournée vers le corps de réglage (20), et la surface latérale de branche (322) reposant sur ledit manchon de raccordement (60).

3. Soupape à boisseau (1) selon l'une quelconque des revendications 1 ou 2, **caractérisée en ce que** ledit élément d'étanchéité (30) a un diamètre intérieur (D1) et un diamètre extérieur (D2) chacun sensiblement correspondant à un diamètre intérieur (D1a) et un diamètre extérieur (D2a) dudit manchon de raccordement (60).

4. Soupape à boisseau (1) selon l'une quelconque des revendications précédentes, **caractérisée en ce que** ledit élément d'étanchéité (30) a une section transversale en forme de U par rapport à la direction circonférentielle, et une hauteur axiale (H1) formée entre les extrémités libres (311, 321) des branches d'étanchéité (31, 32) dans la direction axiale dudit élément d'étanchéité (30), la hauteur étant constante sur toute la circonférence dudit élément d'étanchéité (30).

5. Soupape à boisseau (1) selon l'une quelconque des revendications 1 à 3, **caractérisée en ce que** ledit élément d'étanchéité (30) a une section transversale en forme de V par rapport à la direction circonférentielle, et une hauteur perpendiculaire (H2) disposée entre les branches d'étanchéité (31, 32) dans la direction d'une perpendiculaire des branches d'étanchéité, la hauteur étant constante sur toute la circonférence dudit élément d'étanchéité (30).

6. Soupape à boisseau (1) selon l'une quelconque des revendications précédentes, **caractérisée en ce que** ledit élément d'étanchéité (30) a une section de centrage (34) circonférentielle axialement en saillie vers le manchon de raccordement (60), la section saillant axialement dans un logement (62) formé dans ledit manchon de raccordement (60).

7. Soupape à boisseau (1) selon la revendication 6, **caractérisée en ce que** la section de centrage (34) saille axialement à partir de la base des branches (33) dudit élément d'étanchéité (30).

8. Soupape à boisseau (1) selon l'une quelconque des revendications précédentes, **caractérisée en ce que** ladite première branche d'étanchéité (31) et la deuxième branche d'étanchéité (32) sont équidistantes l'une de l'autre dans chaque section d'extension entre la base des branches (33) et une extrémité libre (311, 321) de ladite branche d'étanchéité (31, 32) sur toute la circonférence dudit élément d'étanchéité (30).

9. Soupape à boisseau (1) selon l'une quelconque des revendications précédentes, **caractérisée en ce que** ladite première branche d'étanchéité (31) repose par toute la surface de la surface latérale de branche (312) tournée vers le corps de réglage (20) sur le contour extérieur (22) du corps de réglage (20) et/ou ladite deuxième branche d'étanchéité (32) repose par toute la surface de la surface latérale de branche (322) détournée du corps de réglage (20) sur le manchon de raccordement (60).

10. Soupape à boisseau (1) selon l'une quelconque des revendications précédentes, **caractérisée en ce que** ledit élément de ressort (40) a une première branche de ressort (41) et une deuxième branche de ressort (42) rejointes de manière intégrale à une base des branches de ressort (43), ladite première branche de ressort (41) reposant sur la première branche d'étanchéité (31) et deuxième branche de ressort (42) reposant sur deuxième branche d'étanchéité (32).

11. Soupape à boisseau (1) selon l'une quelconque des revendications précédentes, **caractérisée en ce qu'**à une extrémité (61) axiale tournée vers le corps de réglage (20), ledit manchon de raccordement (60) a une première surface de face frontale (611) recourbée de manière complémentaire au contour extérieur (22) dudit corps de réglage (20), ladite surface reposant sur ledit élément d'étanchéité (30) sur toute sa surface.

12. Soupape à boisseau (1) selon l'une quelconque des revendications précédentes, **caractérisée en ce que** le deuxième raccordement de soupape (12) forme une sortie de soupape (200) et le côté ouvert dudit élément d'étanchéité (30) est dirigé radialement vers l'extérieur.

13. Soupape à boisseau (1) selon l'une quelconque des revendications précédentes, **caractérisée en ce que** le deuxième raccordement de soupape (12) forme une entrée de soupape (100) et le côté ouvert dudit élément d'étanchéité (30) est dirigé radialement vers l'intérieur.

14. Soupape à boisseau (1) selon la revendication 13, **caractérisée en ce que** la base des branches (33) repose sur le boitier de soupape (10).
